## Europäisches Patentamt
## European Patent Office
## Office européen des brevets

(19)

(11) Numéro de publication : **0 292 374 B1**

(12)

# FASCICULE DE BREVET EUROPEEN

(45) Date de publication du fascicule du brevet :
11.09.91 Bulletin 91/37

(51) Int. Cl.⁵ : **C02F 3/00, G05D 21/02**

(21) Numéro de dépôt : **88401188.3**

(22) Date de dépôt : **17.05.88**

(54) Procédé de régulation du débit d'air dans un système d'épuration d'eaux usées.

(30) Priorité : 18.05.87 FR 8706909

(43) Date de publication de la demande :
23.11.88 Bulletin 88/47

(45) Mention de la délivrance du brevet :
11.09.91 Bulletin 91/37

(84) Etats contractants désignés :
BE CH DE ES FR IT LI

(56) Documents cités :
FR-A- 2 352 752
US-A- 4 255 266

(56) Documents cités :
AUTOMATISME, vol. 21, no. 1/2, janvier-février
1976, pages 26-31, Paris, FR; M. FEUILLADE et
al.: "Utilisation d'un ordinateur temps réel
pour le contrôle et la conduite automatique de
la station d'épuration de Paris-Achères"

(73) Titulaire : "DEGREMONT" Société dite:
183, Avenue du 18 Juin 1940
F-92508 Rueil-Malmaison Cédex (FR)

(72) Inventeur : Audibert, Jacques
55, rue des Platrières
F-95240 Cormeilles en Parisis (FR)

(74) Mandataire : Ores, Irène et al
CABINET ORES 6, Avenue de Messine
F-75008 Paris (FR)

EP 0 292 374 B1

## Description

La présente invention est relative à un procédé de régulation du débit d'air nécessaire pour oxyder la matière organique contenue dans un système d'épuration d'eaux usées.

Il est connu de traiter les eaux usées polluées par des matières organiques en mettant en oeuvre des fermentations, c'est-à-dire des réactions chimiques produites par certains micro-organismes, les bactéries jouant parmi ceux-ci un rôle essentiel, notamment en milieu aérobie.

Les bactéries agissent sur la pollution, qui joue le rôle de nourriture ou substrat. Lorsque la matière organique biodégradable est consommée par une masse donnée de micro-organismes en milieu aérobie, il y a, d'une part, consommation d'oxygène par les micro-organismes, et ce pour leurs besoins énergétiques, leur reproduction par division cellulaire (ce qui correspond à une synthèse de matière vivante) et leur respiration endogène (ce qui correspond à l'auto-oxydation progressive de leur masse cellulaire), et, d'autre part, production d'un excédent de matières vivantes et inertes appelées "boues en excès".

De ce point de vue il est fait application de la notion bien connue des techniciens en la matière, de "DEMANDE BIOCHIMIQUE en OXYGENE (DBO)", qui est la quantité d'oxygène — exprimée en milligrammes par litre et consommée dans des conditions d'essai bien définies (incubation à 20°C et à l'obscurité) — pendant un temps donné pour assurer, par voie biologique, l'oxydation des matières organiques biodégradables présentes dans l'eau usée (il est connu que, pour être complète, l'oxydation biologique demande un temps compris entre 21 à 28 jours).

Or, les procédés mis en oeuvre dans les systèmes d'épuration d'eaux usées sont essentiellement basés sur le principe suivant, qui consiste à provoquer le développement d'une culture bactérienne dispersée sous forme de boues activées dans un bassin d'aération alimenté en eau à épurer.

L'aération de ce bassin s'accompagne d'une action de brassage, qui a pour but d'éviter les dépôts et d'homogénéiser le mélange entre les boues activées (appelées aussi "flocs bactériens") et l'eau usée (dite aussi "liqueur mixte").

En ce qui concerne l'aération, celle-ci — qui peut être effectuée à partir de l'oxygène de l'air ou d'un gaz enrichi en oxygène ou même à partir d'oxygène pur — vise à dissoudre ce gaz dans la liqueur mixte afin de répondre aux besoins des bactéries épuratrices aérobies.

Donc, en résumant brièvement ce qui précède, on peut dire que les systèmes d'aération des eaux usées contenues dans un bassin de traitement de ces eaux ont un double objectif :

— apporter aux micro-organismes des boues activées l'oxygène dont ils ont besoin ;

— provoquer un brassage et une homogénéité suffisants pour assurer un contact intime entre le milieu vivant, les éléments polluants et l'oxygène qui est dissous dans la liqueur mixte.

Ces systèmes d'aération consistent en un appareil ou plus normalement un ensemble d'appareils (soufflantes) destinés à dissoudre dans les eaux usées contenues dans les bassins de traitement de ces eaux, une certaine quantité d'oxygène, qui est généralement empruntée à l'air, et qui est amenée aux différents bassins de traitement par des conduites de diamètre approprié.

Le réglage du débit d'air produit par les appareils d'aération est réalisé à l'aide d'organes connus sous le nom de ventelles, tandis que le réglage du débit d'air qui, une fois produit, se répartit parmi les différents bassins, est effectué à l'aide de vannes appropriées.

Sur la base de ce qui précède, il est donc clair que la régulation du pourcentage d'oxygène dissous dans un bassin de traitement des eaux usées constitue une nécessité vitale pour la bonne marche de tels systèmes d'épuration.

On sait régler le débit d'air total que les appareils d'aération doivent produire pour oxyder la pollution et la rendre décantable. Le principe de ce réglage connu est d'ajuster les débits d'air des appareils d'aération à la demande globale d'air de tous les bassins de traitement. Le débit d'air nécessaire pour chaque bassin est évalué en mesurant l'oxygène dissous dans l'eau des bassins. A cet effet, les techniciens en la matière utilisent la formule suivante, bien connue :

$$\frac{\Delta Q_R}{Q_R} = \frac{C_c - C_m}{C_s - C_c} = r_n$$

dans laquelle :

$C_s =$ concentration d'oxygène dissous correspondant à la saturation,

$C_m =$ concentration d'oxygène dissous mesurée à l'aide de capteurs appropriés,

$C_c =$ concentration optimale de consigne garantissant (et ce quelles que soient les circonstances, telles que l'augmentation de la pollution ou du débit des eaux usées et l'existence de zones à plus faible circulation) la suffisance du débit d'air,

$Q_R$ = débit d'air qui passe réellement dans chaque bassin,

$\Delta Q_R$ = $Q_N - Q_R$,

$Q_N$ = débit d'air nécessaire pour obtenir la concentration $C_c$, $Q_N$ étant défini par la formule :

$$Q_R \cdot \frac{C_s - C_m}{C_s - C_c} \; .$$

La quantité précitée $r_n$ définit les variations relatives du débit d'air et est appelée coefficient de variation du débit d'air.

Une valeur positive de ce coefficient correspond à une demande de variation positive du débit d'air produit, tandis qu'une valeur négative de ce coefficient correspond à une demande de variation négative du débit d'air produit.

Une valeur nulle de ce coefficient, qui correspondrait à la situation dans laquelle la concentration mesurée $C_m$ serait égale à la concentration de saturation $C_s$, correspond par contre à une demande de variation de débit d'air nulle.

Si la concentration mesurée $C_m$ devait être nulle, cela signifierait que tout l'air injecté par les appareils d'aération est consommé par la masse biologique, sans pour autant que l'on soit sûr que la quantité d'air injecté soit suffisante : c'est le rôle de la concentration de consigne (optimale) $C_c$ qui, comme il a été dit plus haut, garantit dans chaque cas un débit suffisant.

Cela étant, le réglage du débit d'air total produit par les appareils d'aération, selon le procédé de réglage connu, consiste à calculer le débit d'air $Q_N$ nécessaire pour obtenir la concentration $C_c$, selon la formule correspondante précitée, et ce pour chaque bassin, de façon à calculer la somme des quantités $Q_N$ relative à chaque bassin : cette valeur totale permet de connaître le nombre d'appareils d'aération, sur les ventelles desquels il faut intervenir. Il y a lieu de préciser que les concentrations $C_m$ d'oxygène dissous dans les eaux usées de chaque bassin sont mesurées à l'aide de capteurs appropriés et que l'utilisation des mesures correspondantes et les calculs nécessaires sont effectués normalement à l'aide d'un automate câblé éventuellement piloté par ordinateur.

Or, ce procédé de réglage présente un inconvénient fondamental qui est lié au fait que le réglage est effectué d'une façon globale, en sorte que la répartition du débit d'air total, ajusté selon le procédé en question, s'effectue au niveau des différents bassins de façon non contrôlée (notamment suivant les lignes piézométriques).

On sait régler aussi le débit d'air bassin par bassin dans le but d'assurer à chaque bassin le débit d'air nécessaire, et ce par répartition du débit d'air total disponible proportionnellement aux besoins de chaque bassin.

Le principe qui est à la base de ce deuxième procédé de réglage consiste essentiellement à rechercher le bassin dont le débit d'air nécessaire $Q_N$ est le plus élevé pour commander l'ouverture en grand de la vanne de réglage correspondante, tout en freinant le débit d'air des autres bassins en agissant sur leur vanne. Or, ce deuxième procédé a l'inconvénient de donner lieu à une distribution non contrôlée des pertes de charges, ce qui n'est pas souhaitable.

La présente invention s'est donc donné pour but de pourvoir à un procédé de régulation du débit d'air nécessaire pour oxyder, par voie microbienne (bactérienne) la matière organique contenue dans un système d'épuration d'eaux usées alimentant une pluralité de bassins de traitement de ces eaux, lequel procédé répond mieux aux exigences de la pratique que les procédés antérieurement connus, notamment en ce que :

— il permet une régulation contrôlée du débit d'air au niveau de la production et, simultanément, au niveau de la répartition, tout en travaillant constamment avec une perte de charge qui est celle minimale admissible dans une situation donnée, pour assurer un fonctionnement toujours satisfaisant du procédé d'épuration aérobie d'eaux usées,

— il permet de réaliser des économies d'énergie de l'ordre d'au moins 2% qui, compte tenu de la puissance installée des appareils d'aération, qui est de l'ordre de plusieurs MW, est loin d'être négligeable,

— il permet une souplesse de régulation à laquelle s'allie une gestion technique centralisée des pannes (éventuelles).

La présente invention a pour objet un procédé de régulation du débit d'air nécessaire à un système d'épuration d'eaux usées pour oxyder, par voie bactérienne, les matières organiques présentes dans ces eaux, qui alimentent une pluralité de bassins de traitement de ces dernières, lesquels bassins coopèrent avec au moins un appareil d'aération, tel qu'une soufflante, destiné à dissoudre dans les eaux usées des bassins une certaine quantité d'oxygène, — qui est nécessaire pour apporter à des bactéries dispersées dans les bassins l'oxygène dont elles ont besoin et pour provoquer, en même temps, un brassage et une homogénéité des eaux usées suffisants pour assurer un contact intime entre le milieu vivant bactérien, les éléments polluants et l'oxygène dissous —, le débit d'air produit par les appareils d'aération étant contrôlé à l'aide d'organes de réglage appropriés, tels que des ventelles, tandis que le débit d'air de chaque bassin est contrôlé par des vannes, notamment des vannes papillon, de répartition du débit d'air produit par les appareils d'aération, ledit procédé comprenant une étape préalable de :

i) calcul, à l'aide d'un automate programmable piloté par microprocesseur et programmé à cet effet, des valeurs des variations relatives de débit d'air définies par les coefficients :

$$r_{n,i} = \frac{\Delta Q_{R,i}}{Q_{R,i}} = \frac{C_{c,i} - C_{m,i}}{C_{s,i} - C_{c,i}} \quad , \quad \begin{array}{l} i = 1,2, \ldots p \\ p \geqslant 1 \end{array}$$

relatif à chaque bassin, où :

$C_{s,i} =$ concentration d'oxygène dissous correspondant à la saturation,

$C_{m,i} =$ concentration d'oxygène dissous mesurée à l'aide de capteurs,

$C_{c,i} =$ concentration optimale de consigne garantissant la suffisance du débit d'air, et ce quelles que soient les circonstances, telles que l'augmentation de la pollution ou du débit des eaux usées et l'existence de zones à plus faible circulation,

$Q_{R,i} =$ débit d'air qui passe réellement dans chaque bassin,

$\Delta Q_{R,i} = Q_{N,i} - Q_{R,i}$,

$Q_{N,i} =$ débit d'air nécessaire pour obtenir la concentration $C_{c,i}$, $Q_{N,i}$ étant défini par la formule :

$$Q_{R,i} \cdot \frac{C_{s,i} - C_{m,i}}{C_{s,i} - C_{c,i}} \quad ,$$

lesquels coefficients $r_{n,i}$ sont calculés pour chaque bassin en utilisant les valeurs mesurées des différentes $C_{m,i}$ compte tenu des valeurs de consigne $C_{c,i}$ et de saturation $C_{s,i}$ propres à chaque bassin ;

lequel procédé est caractérisé en ce qu'il comprend en outre les étapes supplémentaires suivantes :

ii) comparaison par l'automate des signes des valeurs ainsi calculées pour les différents coefficients $r_{n,i}$ ;

iii) intervention, par l'intermédiaire dudit automate programmable, et ce en fonction du résultat de l'étape de comparaison ii) :

α) sur les seules ventelles de réglage du débit d'air produit par les appareils d'aération, dans le seul cas où l'étape ii) révèle que tous les coefficients $r_{n,i}$ ont les mêmes signes, cette intervention étant effectuée à répartition constante, à savoir avec les vannes de répartition affectées à chaque bassin dans l'état initial ;

β) sur les vannes de répartition du débit d'air à l'entrée des bassins correspondants, dans le seul cas où l'étape ii) révèle que les coefficients $r_{n,i}$ ont des signes différents, cette intervention étant effectuée à débit d'air constant produit par les appareils d'aération ;

iv) répétition des étapes i) à iii) à intervalles de temps réguliers, définissant la période d'action de la régulation de débit d'air et qui sont de l'ordre de quelques minutes.

Selon un mode de réalisation préféré du procédé selon l'invention, les interventions commandées par l'automate programmable, en fonction des résultats de l'étape de comparaison ii), sont constituées par l'une quelconque des opérations suivantes :

1) actionnement des ventelles des appareils d'aération dans le sens qui correspond à une diminution du débit d'air produit par ceux-ci, lorsque l'étape de comparaison ii) révèle que les coefficients $r_{n,i}$ sont tous négatifs ;

2) actionnement des ventelles des appareils d'aération dans le sens qui correspond à une augmentation du débit d'air produit par ceux-ci, lorsque l'étape de comparaison ii) révèle que les coefficients $r_{n,i}$ sont tous positifs ;

3) commande de l'une quelconque des opérations suivantes, lorsque l'étape de comparaison ii) révèle que les coefficients $r_{n,i}$ sont de signes différents :

a) ouverture de la vanne du bassin correspondant au coefficient $r_{n,i}$ positif maximum ($r_{n,i\ maxi}$), et ce d'une valeur $\Delta'\alpha = r_{n,i\ mini} \cdot \alpha'_o$, où $\alpha'_o$ est la position initiale de cette vanne,

b) fermeture, dans le respect de la valeur minimum admissible, de la vanne du bassin correspondant au coefficient $r_{n,l}$ négatif ayant la valeur absolue la plus grande ($r_{n,l\ minl}$), et ce d'une valeur $\Delta''\alpha = r_{n,l\ minl} \cdot \alpha'_o$, où $\alpha'_o$ est la position initiale (initiale) de cette vanne, si la vanne correspondant à la valeur $r_{n,l\ maxl}$ est déjà ouverte en grand,

c) élimination des valeurs extrêmes des coefficients $r_{n,l\ maxl}$ et $r_{n,l\ minl}$, si la vanne correspondant à la valeur $r_{n,l} = r_{n,l\ minl}$ est déjà fermée jusqu'à la valeur minimum admissible, et commande de l'une quelconque des opérations 1) et 2), selon que les coefficients restants $r_{n,l}$ ont des valeurs dont les signes sont tous négatifs ou positifs, ainsi que l'une quelconque des opérations 3a) à 3c), lorsque les coefficients restants $r_{n,l}$ ont des valeurs de signes différents, jusqu'à intéresser tous les bassins,

et en ce que l'automate programmable déclenche l'émission d'une alarme si, lorsqu'il commande pour la dernière fois, et ce jusqu'à la 2 p-ème fois, l'exécution des opérations évoquées sous 3c), cette commande n'aboutit à aucune opération positive.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels :

— la figure 1 illustre, de façon schématique, une installation d'épuration d'eaux usées,

— la figure 2 représente, de façon schématique et simplifiée, des boucles de régulation du débit d'air du système d'épuration illustré à la figure 1.

Il doit être bien entendu, toutefois, que ces dessins et les parties descriptives correspondantes, sont donnés uniquement à titre d'illustration de l'objet de l'invention, dont ils ne constituent en aucune manière une limitation.

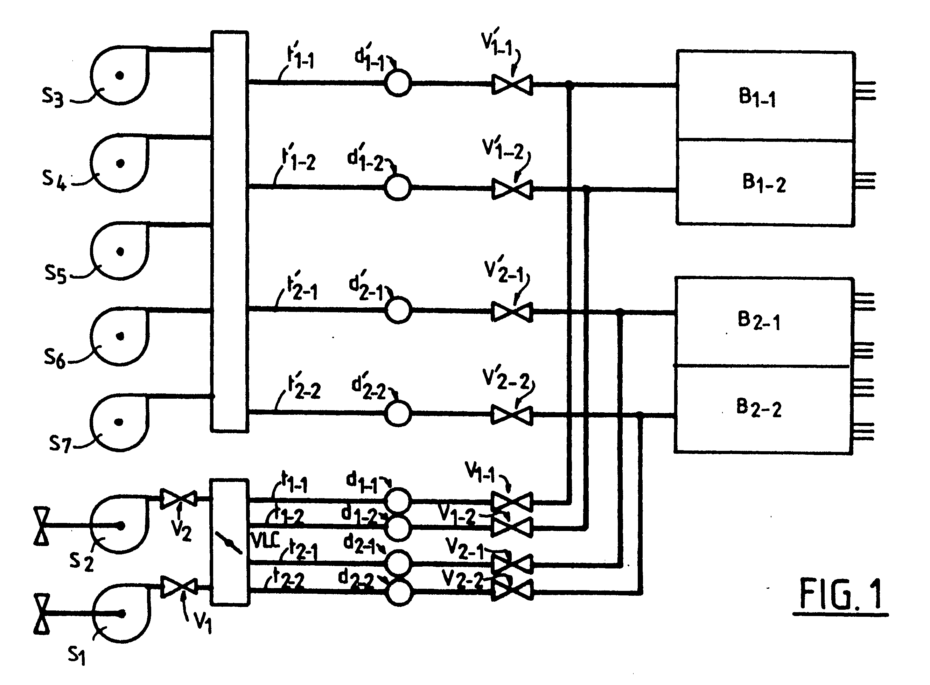

La figure 1 se réfère, à titre d'exemple non limitatif, à un système d'épuration d'eaux usées comportant quatre bassins de traitement $B_{1.1}$-$B_{1.2}$-$B_{2.1}$-$B_{2.2}$, un premier groupe d'appareils d'aération (soufflantes) $S_3$ à $S_7$, destiné à la production de débit d'air de base (qui est relativement constant) et un deuxième groupe d'appareils d'aération $S_1$,$S_2$ destiné à la production de débit d'air variable, qui est régulée par les ventelles $V_1$, $V_2$.

Dans la figure 1 les références $d'_{1.1}$ à $d'_{2.2}$ et $d_{1.1}$ à $d_{2.2}$ représentent des débimètres chacun disposé sur une conduite d'air.

Il y a lieu de remarquer que les bassins sont associés deux à deux, et ce pour tenir compte de la pratique courante (selon laquelle on distingue un bassin en amont d'un bassin en aval pour chaque association double).

Bien entendu, le nombre des bassins illustrés n'est pas limitatif, de même que le caractère pair de ce nombre, qui est lié à la pratique évoquée ci-dessus.

Le débit d'air de base et le débit d'air variable produits par les groupes d'appareils d'aération $S_3$ à $S_7$ et $S_1$-$S_2$, respectivement, sont acheminés vers les bassins de traitement $B_{1.1}$ à $B_{2.2}$ par deux réseaux de conduites de distribution $t'_{1.1}$ à $t'_{2.2}$ et $t_{1.1}$ à $t_{2.2}$.

La répartition du débit d'air produit par les appareils d'aération $S_3$ à $S_7$ se fait à l'aide de vannes $V'_{1.1}$ à $V'_{2.2}$, tandis que la répartition du débit d'air produit par les appareils d'aération $S_1$-$S_2$ se fait à l'aide de vannes $V_{1.1}$ à $V_{2.2}$, la régulation du débit produit par les appareils d'aération $S_1$-$S_2$ se faisant comme précisé plus haut, à l'aide des ventelles $V_1$, $V_2$.

Si pour chaque bassin, on pose que :

| | |
|---|---|
| $C_{s,l} =$ | concentration d'oxygène dissous correspondant à la saturation, |
| $C_{m,l} =$ | concentration d'oxygène dissous mesurée à l'aide de capteurs appropriés, |
| $C_{c,l} =$ | concentration optimale de consigne garantissant (quelles que soient les circonstances, telles que l'augmentation de la pollution ou du débit des eaux usées et l'existence de zones à plus faible circulation) la suffisance du débit d'air, |
| $Q_{R,l} =$ | débit d'air qui passe réellement dans chaque bassin, |
| $\Delta Q_{R,l} =$ | $Q_{N,l} - Q_{R,l}$, |
| $Q_{N,l} =$ | débit d'air nécessaire pour obtenir la concentration $C_{c,l}$, $Q_{N,l}$ étant donné par la formule : |

$$Q_{R,i} \cdot \frac{C_{s,i} - C_{m,i}}{C_{s,i} - C_{c,i}} ,$$

le procédé selon l'invention consiste à appliquer la formule suivante, connue des techniciens en la matière :

$$r_{n,i} = \frac{\Delta Q_{R,i}}{Q_{R,i}} = \frac{C_{C,i} - C_{m,i}}{C_{s,i} - C_{C,i}} \quad , \quad i = 1,2, \ldots p , \quad p \geqslant 1 ,$$

dans chaque cas l'indice i étant variable de 1 à p (= 4), à savoir égal au nombre de bassins de traitement), et ce pour calculer les coefficients de variation de débit d'air

$$r_{n,i} = \frac{\Delta Q_{R,i}}{Q_{R,i}} .$$

Ces opérations, ainsi que les suivantes, sont effectuées à l'aide d'un automate programmable (et programmé à cet effet), sous le contrôle d'un ordinateur.

Après quoi, on effectue une comparaison des signes des coefficients $r_{n,i}$ et on intervient, toujours par l'intermédiaire dudit automate programmable, pour effectuer la suite d'opérations illustrées dans le tableau ci-après, qui a été établi en faisant référence au système d'épuration illustré à la figure 1 (qui comporte seulement quatre bassins soit p = 4), et qui peut être facilement généralisé à un nombre quelconque de bassins, pair ou impair.

| $\dfrac{\Delta Q_{R,i}}{Q_{R,i}} = r_{n,i}$ | | | | actions |
|---|---|---|---|---|
| négatif | négatif | négatif | négatif | diminution du débit d'air produit (action sur les ventelles des soufflantes) |
| positif | positif | positif | positif | augmentation du débit d'air produit (action sur les ventelles des soufflantes) |
| positif/négatif | | | | ouverture de la vanne correspondante à $r_{n,i}$ positif le plus grand ($r_{n,i\,maxi}$) sauf si elle est ouverte en grand: dans ce cas, fermeture de la vanne correspondante à $r_n$ négatif le plus grand en valeur absolue ($r_{n,i\,mini}$) |
| | | | | élimination des $r_{n,i}$ extrêmes |
| | négatif | négatif | | diminution du débit d'air produit |
| | positif | positif | | augmentation du débit d'air produit |
| négatif/positif | | | | voir l'algorithme ci-après qui reprend les actions ci-dessus tout en complétant celles correspondant à cette situation. |

ALGORITHME

```
$r_{n,i}$ tous négatifs  ---> oui  ---> diminution      ---> fin de l'action
                          :            du débit d'air
                          :            produit
                          '----- > non  --->
         ,-------------------'
         :
         v
$r_{n,i}$ tous positifs  ---> oui  ---> augmentation    ---> fin de l'action
                          :            du débit d'air
                          :            produit
                          '----- > non
                          :
                          v
```

Vanne correspondante à $r_{n,i}$ positif le plus grand ($r_{n,i\ maxi}$)

Vanne ouverte en grand --> non --> ouverture d'une --> fin de l'action
valeur
$\Delta'\ \alpha = r_{n,i\ maxi} \cdot \alpha'_0$

L----> oui

Vanne correspondate à $r_{n,i}$ négatif le plus grand ($r_{n,i\ mini}$)
en valeur absolue

Vanne fermée au mini --- > non --> fermeture d'une --> fin de l'action
mum admissible
valeur
$\Delta''\ \alpha = r_{n,i\ mini} \cdot \alpha''_0$

L------> oui

Eliminer les $r_{n,i}$ extrêmes

$r_{n,i}$ restants tous
négatifs --- > oui --> augmentation du --> fin de l'action
débit d'air
produit

L--------> non

$r_{n,i}$ restants tous
positifs --- > oui --> augmentation du --> fin de l'action
débit d'air
produit

L-------> non

Vanne correspondante à $r_{n,i}$ positif le plus grand ($r'_{n,i\ maxi}$)
parmi les $r_{n,i}$ restants ($= p-2 = 4-2 = 2$)

```
                              _____
                             |                              |
                             v
Vanne ouverte en grand  --> non -->  ouverture d'une  --> fin de l'action
                             |                  valeur
                             |        Δᵐα=r'ₙ,ᵢ maxi · αᵐₒ
                             |
                             L----> oui
                                       |
                                       v
Vanne correspondante à rₙ,ᵢ négatif le plus grand en valeur absolue
                             |              (r'ₙ,ᵢ mini) parmi les 2   rₙ,ᵢ
                             |              restants
                      _____
                     |                               |
                     v
Vanne fermée au mini-  ---> non -->  fermeture d'une  --> fin de l'action
mum admissible         |                  valeur
                       |        Δ¹ⱽα=r'ₙ,ᵢ mini · α⁰¹ⱽ
                       |
                       L------> oui
                                  |
                                  v
                            _____
                           | ALARME    |
                           |_____|
```

Les actions définies par le tableau et l'algorithme qui précèdent sont répétées à des intervalles de temps réguliers, qui définissent la période d'action de la régulation du débit d'air, qui est de l'ordre de 10 à 15 minutes.

On voit donc que, lorsque les coefficients $r_{n,i}$ ont tous le même signe, cela est interprété par l'automate comme un problème de production, qui exige une variation positive ou négative du débit produit par les appareils $S_1$-$S_2$, ce qui est obtenu par l'automate, qui commande l'ouverture ou la fermeture appropriées des ventelles $V_1$ et $V_2$, selon que les signes des coefficients $r_{n,i}$ sont tous positifs ou négatifs, respectivement ; tandis que, lorsque ces coefficients ont des signes différents, cette situation est interprétée par l'automate comme correspondant à un problème de répartition du débit d'air produit parmi les différents bassins, ce qui se traduit par une action sur l'une quelconque des vannes $V_{1.1}$ à $V_{2.2}$, selon le résultat des opérations de comparaison illustré dans l'algorithme qui précède.

Or, il faut souligner que, lorsqu'il s'agit d'un problème de production, la régulation du débit se fait à répartition constante, tandis que lorsqu'il s'agit d'un problème de répartition du débit d'air produit, cette répartition se fait à débit d'air produit constant.

La mise en oeuvre de l'algorithme précité, et donc du procédé de régulation selon l'invention, donne lieu à la création d'un logiciel spécifique à ce type de régulation, mais qui est adaptable à n'importe quel support, tel que disquette ou autre, et à n'importe quel automate programmable, dont les principaux sont constitués par les appareils connus sous les marques de commerce et de fabrique "MODICON", "TEXAS", "TELEMEC", "SIEMENS", "APRIL" et analogues.

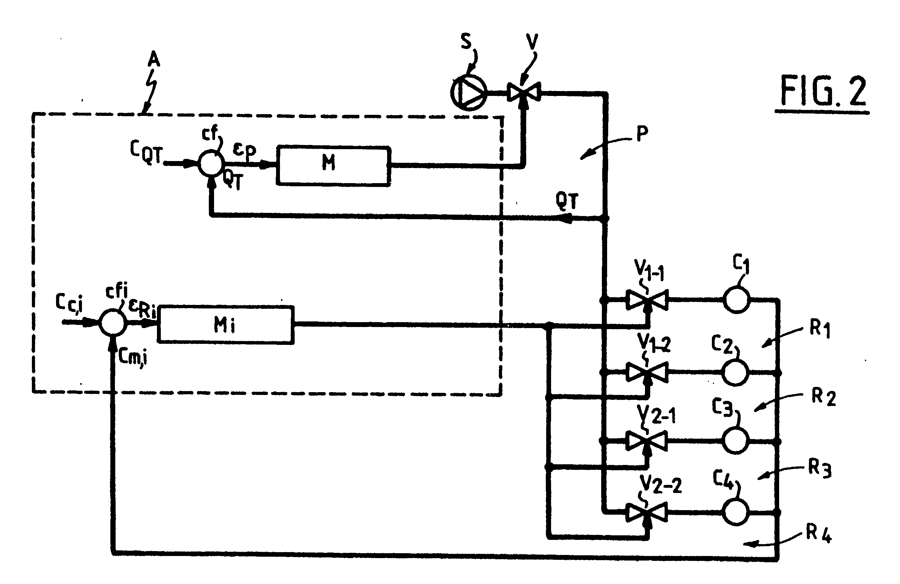

La figure 2 montre, de façon schématique et simplifiée, les boucles de régulation permettant la mise en oeuvre du procédé selon l'invention.

La boucle P est la boucle de régulation de la production du débit d'air, tandis que les boucles $R_1$ à $R_4$ sont les boucles de régulation de la répartition du débit d'air entre les différents bassins.

(De façon plus précise, la boucle P est définie par la succession d'éléments bouclés cf, M et V, tandis que chacune des boucles Ri est définie par la succession d'éléments bouclés $cf_i$, $M_i$, $V_{i,j}$ et $c_i$, $\varepsilon_p$ et $\varepsilon_{Ri}$ étant les erreurs des boucles correspondantes, à savoir de production et de répartition, alors que la partie délimitée par un rectangle en pointillé A se réfère schématiquement à l'automate programmable).

Dans la boucle P, la comparaison est faite entre le débit d'air total mesuré $Q_T$ et une valeur de consigne $C_{QT}$, le bloc M commandant l'action de réglage voulue au niveau des ventelles (pour des raisons de simplification, on a représenté une ventelle unique V associée à un appareil de production d'air S unique).

En ce qui concerne chaque boucle de répartition $R_i$ (i = 1 à 4), la comparaison est faite entre la concentration d'oxygène dissous mesurée $C_{m,i}$ effectuée à l'aide de capteurs d'oxygène dissous $c_i$ (i = 1 à 4), et une valeur de consigne $C_{c,i}$ : dans ce cas, l'action du bloc $M_i$ consiste à agir sur l'une quelconque des vannes $V_{1.1}$ à $V_{2.2}$ selon les résultats des opérations précitées.

A cet effet, il y a lieu de souligner que, comme le montre l'algorithme précité, qui se rapporte plus particulièrement au mode de réalisation représenté aux figures 1 et 2, l'automate programmable est programmé, entre autres, aussi pour déclencher l'émission d'une alarme toutes les fois que, lorsqu'il commande pour la dernière fois l'exécution des opérations correspondant à des coefficients $r_{n,i}$ de signe différent, cette commande ne peut aboutir à aucune opération positive.

## Revendications

1. Procédé de régulation du débit d'air nécessaire à un système d'épuration d'eaux usées pour oxyder, par voie bactérienne, les matières organiques présentes dans ces eaux, qui alimentent une pluralité de bassins ($B_{1,1}$ à $B_{2,2}$) de traitement de ces dernières, lesquels bassins coopèrent avec au moins un appareil d'aération, tel qu'une soufflante ($S_1$ à $S_7$), destiné à dissoudre dans les eaux usées des bassins ($B_{1,1}$ à $B_{2,2}$) une certaine quantité d'oxygène, — qui est nécessaire pour apporter à des bactéries dispersées dans les bassins l'oxygène dont elles ont besoin et pour provoquer, en même temps, un brassage et une homogénéité des eaux usées suffisants pour assurer un contact intime entre le milieu vivant bactérien, les éléments polluants et l'oxygène dissous —, le débit d'air produit par les appareils d'aération ($S_1$ à $S_7$) étant contrôlé à l'aide d'organes de réglage appropriés, tels que des ventelles ($V_1$, $V_2$), tandis que le débit d'air de chaque bassin ($B_{1,1}$ à $B_{2,2}$) est contrôlé par des vannes, notamment des vannes papillon ($V_{1,1}$ à $V_{2,2}$), de répartition du débit d'air produit par les appareils d'aération, ledit procédé comprenant une étape préalable de :

i) calcul, à l'aide d'un automate programmable (A) piloté par microprocesseur et programmé à cet effet, des valeurs des variations relatives de débit d'air définies par les coefficients :

$$r_{n,i} = \frac{\Delta Q_{R,i}}{Q_{R,i}} = \frac{C_{c,i} - C_{m,i}}{C_{s,i} - C_{c,i}} \; , \; \begin{array}{l} i = 1,2, \; \ldots \; p \\ p \geqslant 1 \end{array}$$

relatif à chaque bassin, où :

$C_{s,i} =$     concentration d'oxygène dissous correspondant à la saturation,

$C_{m,i} =$     concentration d'oxygène dissous mesurée à l'aide de capteurs ($c_1$ à $c_4$),

$C_{c,i} =$     concentration optimale de consigne garantissant la suffisance du débit d'air, et ce quelles que soient les circonstances, telles que l'augmentation de la pollution ou du débit des eaux usées et l'existence de zones à plus faible circulation,

$Q_{R,i} =$     débit d'air qui passe réellement dans chaque bassin,

$\Delta Q_{R,i} =$     $Q_{N,i} - Q_{R,i}$,

$Q_{N,i} =$     débit d'air nécessaire pour obtenir la concentration $C_{c,i}$, $Q_{N,i}$ étant défini par la formule :

$$Q_{R,i} \; . \; \frac{C_{s,i} - C_{m,i}}{C_{s,i} - C_{c,i}} \; ,$$

lesquels coefficients $r_{n,i}$ sont calculés pour chaque bassin en utilisant les valeurs mesurées des différentes $C_{m,i}$ compte tenu des valeurs de consigne $C_{c,i}$ et de saturation $C_{s,i}$ propres à chaque bassin ;

lequel procédé est caractérisé en ce qu'il comprend en outre les étapes supplémentaires suivantes :

ii) comparaison par l'automate des signes des valeurs ainsi calculées pour les différents coefficients $r_{n,i}$ ;

iii) intervention, par l'intermédiaire dudit automate programmable, et ce en fonction du résultat de l'étape de comparaison ii) :

α) sur les seules ventelles de réglage du débit d'air produit par les appareils d'aération, dans le seul cas où l'étape ii) révèle que tous les coefficients $r_{n,i}$ ont les mêmes signes, cette intervention étant effectuée à répartition constante, à savoir avec les vannes de répartition affectées à chaque bassin dans l'état initial;

β) sur les vannes de répartition du débit d'air à l'entrée des bassins correspondants, dans le seul cas où l'étape ii) révèle que les coefficients $r_{n,i}$ ont des signes différents, cette intervention étant effectuée à débit d'air constant produit par les appareils d'aération ;

iv) répétition des étapes i) à iii) à intervalles de temps réguliers, définissant la période d'action de la régulation de débit d'air et qui sont de l'ordre de quelques minutes.

2. Procédé selon la revendication 1, caractérisé en ce que les interventions commandées par l'automate programmable, en fonction des résultats de l'étape de comparaison ii), sont constituées par l'une quelconque

EP 0 292 374 B1

des opérations suivantes :

1) actionnement des ventelles des appareils d'aération dans le sens qui correspond à une diminution du débit d'air produit par ceux-ci, lorsque l'étape de comparaison ii) révèle que les coefficients $r_{n,i}$ sont tous négatifs ;

2) actionnement des ventelles des appareils d'aération dans le sens qui correspond à une augmentation du débit d'air produit par ceux-ci, lorsque l'étape de comparaison ii) révèle que les coefficients $r_{n,i}$ sont tous positifs ;

3) commande de l'une quelconque des opérations suivantes, lorsque l'étape de comparaison ii) révèle que les coefficients $r_{n,i}$ sont de signes différents :

a) ouverture de la vanne du bassin correspondant au coefficient $r_{n,i}$ positif maximum ($r_{n,i\,maxi}$), et ce d'une valeur $\Delta'\alpha = r_{n,i\,maxi} \cdot \alpha'_o$, où $\alpha'_o$ est la position initiale de cette vanne,

b) fermeture, dans le respect de la valeur minimum admissible, de la vanne du bassin correspondant au coefficient $r_{n,i}$ négatif ayant la valeur absolue la plus grande ($r_{n,i\,mini}$), et ce d'une valeur $\Delta''\alpha = r_{n,i\,mini} \cdot \alpha'_o$, où $\alpha'_o$ est la position initiale de cette vanne, si la vanne correspondant à la valeur $r_{n,i\,maxi}$ est déjà ouverte en grand,

c) élimination des valeurs extrêmes des coefficients $r_{n,i\,maxi}$ et $r_{n,i\,mini}$, si la vanne correspondant à la valeur $r_{n,i}$ est déjà fermée jusqu'à la valeur minimum admissible, et commande de l'une quelconque des opérations 1) et 2), selon que les coefficients restants $r_{n,i}$ ont des valeurs dont les signes sont tous négatifs ou positifs, ainsi que l'une quelconque des opérations 3a) à 3c), lorsque les coefficients restants $r_{n,i}$ ont des valeurs de signes différents, jusqu'à intéresser tous les bassins,

et en ce que l'automate programmable déclenche l'émission d'une alarme si, lorsqu'il commande pour la dernière fois l'exécution des opérations évoquées sous 3c), cette commande n'aboutit à aucune opération positive.

## Claims

1. A method of regulating the flow rate of air required by a wastewater purification system for bacterial oxidization of the organic substances present in the water, the water being fed to a plurality of water treatment basins ($B_{1.1}$ to $B_{2.2}$), which basins co-operate with at least one aeration apparatus such as a blower ($S_1$ to $S_7$) for dissolving a certain quantity of oxygen in the wastewater in the basins ($B_{1.1}$ to $B_{2.2}$), which apparatus is required to deliver the oxygen needed by the bacteria dispersed in the basins, and simultaneously to stir and homogenize the wastewater sufficiently to ensure intimate contact between the living bacterial medium, the pollutants, and the dissolved oxygen, the flow rate of the air produced by the aeration apparatuses ($S_1$ to $S_7$) being controlled by suitable regulation members such as slides ($V_1$, $V_2$), with the air flow rate in each basin ($B_{1.1}$ to $B_{2.2}$) being controlled by valves, in particular by butterfly valves ($V_{1.1}$ to $V_{2.2}$) for distributing the air flow produced by the aeration apparatuses, said method including a preparatory step of :

i) using a programmable controller (A) controlled by a microprocessor programmed for this purpose to calculate values of relative air flow rate variations as defined by the coefficients :

$$r_{n,i} = \frac{\delta A_{R,i}}{Q_{R,i}} = \frac{C_{c,i} - C_{m,i}}{C_{s,i} - C_{c,i}}, \quad i = 1, 2, \ldots, p \quad p \geq 1$$

relating to each basin, where :

$C_{s,i} =$ the concentration of dissolved oxygen corresponding to saturation ;

$C_{m,i} =$ the concentration of dissolved oxygen as measured using sensors ($C_1$ to $c_4$) ;

$C_{c,i} =$ the optimum reference concentration guaranteeing a sufficient air flow rate under any circumstances, e.g. an increase in pollution or an increase in the flow rate of wastewater together with the existence of relatively low flow rate zones ;

$Q_{R,i} =$ the rate of air really flowing through each basins ;

$\delta Q_{R,i} = Q_{N,i} - Q_{R,i}$ ;

$Q_{N,i} =$ the air flow rate needed to obtain the concentration $C_{c,i}$, where $Q_{N,i}$ is defined by the formula :

11

$$Q_{R,i} \cdot \frac{c_{s,i} - c_{m,i}}{c_{s,i} - c_{c,i}}$$

in which the coefficients $r_{n,i}$ are calculated for each basin by using the measured values of the various $C_{m,i}$ taking account of the reference values $C_{c,i}$ and of the saturation value $C_{s,i}$ specific to each basin ;
which method is characterized in that it further includes the following additional steps :

ii) comparison by the controller of the signs of the values calculated in this way for the various coefficient $r_{n,i}$ ;

iii) action, by said programmable controller as a function of the result of comparison step ii) ;

α) acting solely on the slides for adjusting the air flow produced by the aeration apparatuses, solely when step ii) shows that all of the coefficients $r_{n,i}$ have the same sign, with this action being performed at constant distribution, i.e. with the distribution valves for each basin remaining in their initial states ;

β) acting on the air flow rate distribution valves at the inlets to the corresponding basins solely when step ii) shows that the coefficients $r_{n,i}$ have different signs, with this action taking place with the aeration apparatuses producing a constant air flow rate ; and

iv) repeating steps i) to iii) at regular time intervals defining the period at which regulation action is taken on the air flow rate, which periods are of the order of several minutes.

2. A method according to claim 1, characterized in that the actions controlled by the programmable controller as a function of the results of comparison step ii) are constituted by any one of the following operations:

1) actuating the slides of the areation apparatuses in the direction which corresponds to reducing the air flow rate produced thereby, when comparison step ii) shows that all of the coefficients $r_{n,i}$ are negative ;

2) actuating the slides of the aeration apparatuses in the direction which corresponds to increasing the air flow rate produced thereby, when comparison step ii) shows that all of the coefficients $r_{n,i}$ are positive ;

3) causing any of the following operations to be performed when comparison step ii) shows that the coefficient $r_{n,i}$ are of different signs ;

a) opening the valve of the basin corresponding to the most positive coefficient $r_{n,i}$ ($r_{n,i\ max}$), by an amount $\delta'\alpha = r_{n,i\ max} \cdot \alpha'O$ where $\alpha'O$ is the initial position of the valve ;

b) if the valve corresponding to the value $r_{n,i}$ is already wide open, then, while respecting the minimum acceptable value, closing the valve of the basin corresponding to the negative coefficient $r_{n,i}$ having the greatest absolute value ($r_{n,i\ min}$), by a value $\delta''\alpha = r_{n,i\ min} \cdot \alpha''O$, where $\alpha''O$ is the initial position of the valve ;

c) if the valve corresponding to the value $r_{n,i}$ is already closed down to the minimum admissible value, eliminating the extreme values of coefficients $r_{n,i\ max}$ and $r_{n,i\ min}$, and performing the appropriate one of operations 1) and 2) if all the remaining coefficients $r_{n,i}$ have values whose signs are all negative or all positive, and performing the appropriate one of operations 3a) to 3c) if the remaining coefficients $r_{n,i}$ have values of differing signs, until all of the basins have been dealt with ;

and in that the programmable controller triggers an alarm if, when implementing the operations mentioned above under 3c) for the last time, no positive operation occurs.

## Patentansprüche

1. Verfahren zur Regelung des Durchsatzes an Luft, der bei einem System zur Reinigung von Abwässern für das auf bakteriellem Weg erfolgende Oxydieren von organischen Materialien, die in diesen Wässern vorhanden sind, notwendig ist, welche eine Mehrzahl von Bassins ($B_{1,1}$ bis $B_{2,2}$) zur Behandlung der letzteren speisen, welche Bassins mit wenigstens einer Belüftungseinrichtung, wie einem Gebläse ($S_1$ bis $S_7$), zusammenwirken, die dazu bestimmt ist, eine gewisse Menge an Sauerstoffwelche notwendig ist, um den in den Bassins dispergierten Bakterien den Sauerstoff, den sie benötigen, zuzuführen und gleichzeitig ein Umrühren und eine Homogenität der Abwässer zu bewirken, die Ausreichend sind, um einen intimen Kontakt zwischen dem Milieu lebender Bakterien, den Verschmutzungselementen und dem gelösten Sauerstoff sicherzustellen — in den Abwässern der Bassins ($B_{1,1}$ bis $B_{2,2}$) zu lösen, wobei der Durchsatz an Luft, der durch die Belüftungseinrichtungen ($S_1$ bis $S_7$) erzeugt wird, mit Hilfe von geeigneten Regelorganen, wie Schleusenklappen ($V_1$ bis $V_2$), gesteuert wird, während der Durchsatz an Luft jedes Bassins ($B_{1,1}$ bis $B_{2,2}$) durch Ventile, insbesondere Drosselklappen, ($V_{1,1}$ bis $V_{2,2}$), für die Verteilung des durch die Belüftungseinrichtungen erzeugten Durchsatzes an Luft gesteuert wird, welches Verfahren einen vorgängigen Schritt umfaßt :

i) mit Hilfe eines programmierbaren Automaten (A), der durch Mikroprozessor fremdgesteuert und zu diesem Zweck programmiert ist, werden Werte der relativen Variationen des Durchsatzes an Luft, definiert durch die Koeffizienten :

$$r_{n,i} = \frac{\Delta Q_{R,i}}{Q_{R,i}} = \frac{C_{C,i} - C_{m,i}}{C_{S,i} - C_{C,i}} , \quad i = 1, 2, \ldots p \quad p \geqslant 1$$

bezüglich jedes Bassins berechnet, worin :

$C_{s,i}$ = Konzentration des gelösten Sauerstoffs, die der Sättigung entspricht,

$C_{m,i}$ = Konzentration des gelösten Sauerstoffs, die mit Hilfe von Meßfühlern ($C_1$ bis $C_4$) gemessen worden ist,

$C_{C,i}$ = optimale Konzentation des Einstellwerts, welche das Ausreichen des Durchsatzes an Luft garantiert, und dieses wie auch die Umstände seien, wie die Erhöhung der Verschmutzung oder des Durchsatzes an Abwässern und der Existenz von Zonengeringerer Zirkulation,

$Q_{R,i}$ = Durchsatz an Luft, der tatsächlich in jedem Bassin durchtritt,

$\Delta Q_{R,i}$ = $Q_{N,i} - Q_{R,i}$,

$Q_{N,i}$ = Durchsatz an Luft, der notwendig ist, um die Konzentration $C_{C,i}$ zu erhalten, wobei $Q_{N,i}$ definiert ist durch die Formel :

$$Q_{R,i} \cdot \frac{C_{S,i} - C_{m,i}}{C_{S,i} - C_{C,i}} ),$$

welche Koeffizienten $r_{n,i}$ für jedes Bassin unter Verwendung der gemessenen Werte unterschiedlicher $C_{m,i}$ unter Berücksichtigung der Werte des Einstellwerts $C_{C,i}$ der Sättigung $C_{S,i}$ die für jedes Bassin geeignet sind, berechnet werden ;

welches Verfahren dadurch gekennzeichnet ist, daß es außerdem die folgenden ergänzenden Schritte umfaßt:

ii) Vergleich der Vorzeichen der so für die unterschiedlichen Koeffizienten $r_{n,i}$ berechneten Werte durch den Automaten ;

iii) mittels des programmierbaren Automaten erfolgt ein Eingriff, und das in Abhängigkeit von dem Ergebnis des Vergleichsschrittes ii) :

α) über die einzigen Schleusenklappen für die Regelung des Durchstzes an Luft, der durch die Belüftungseinrichtungen erzeugt wird, in dem einzigen Fall, in dem der Schritt ii) zeigt, daß alle die Koeffizienten $r_{n,i}$ die gleichen Vorzeichen haben, wobei dieser Eingriff mit konstanter Verteilung bewirkt wird, das heißt mit den jedem Bassin zugeordneten Ventilen für die Verteilung im Ausgangszustand,

β) über die Ventile für die Verteilung des Durchsatzes an Luft am Eingang der entsprechenden Bassins in dem einzigen Fall, in dem der Schritt ii) zeigt, daß die Koeffizienten $r_{n,i}$ unterschiedliche Vorzeichen haben, wobei dieser Eingriff mit durch die Belüftungseinrichtungen erzeugtem konstantem Durchsatz an Luft bewirkt wird ;

iv) Wiederholung der Schritte i) bis iii) in regelmäßigen Zeitintervallen, welche die Aktionsperiode der Regelung des Durchsatzes an Luft definieren und welche in der Größenordnung von einigen Minuten sind.

2. Verfahren nach Anspruch 1, dadurch **gekennzeichnet**, daß die durch den programmierbaren Automaten befohlenen Eingriffe in Abhängigkeit von den Ergebnissen des Vergleichsschritts ii) von irgendeiner der folgenden Operationen gebildet sind :

1) Betätigung der Schleusenklappen der Belüftungseinrichtungen in der Richtung, welche einer Verkleinerung des Durchsatzes an Luft, der durch diese erzeugt wird, entspricht, wenn der Vergleichsschritt ii) zeigt, daß die Koeffizienten $r_{n,i}$ alle negativ sind,

2) Betätigung der Schleusenklappen der Belüftungseinrichtungen in der Richtung, welche einer Erhohung des Durchsatzes an Luft, der durch diese erzeugt wird, entspricht, wenn der Vergleichsschritt ii) zeigt, daß die Koeffizienten $r_{n,i}$ alle positiv sind,

3) Befehl für irgendeine der folgenden Operationen, wenn der Vergleichsschritt ii) zeigt, daß die Koeffizienten $r_{n,i}$ unterschiedliche Vorzeichen haben :

a) Öffnung des Ventils des Bassins, das dem Koeffizienten $r_{n,i}$ positiv Maximum ($r_{n,i\,maxi}$) entspricht, und das mit einem Wert $\Delta'\alpha = r_{n,i\,maxi} \cdot \alpha'o$ worin $\alpha'o$ die anfängliche Position dieses Ventils ist,

b) im Hinblick auf den minimal zulässigen Wert wird das Ventil des Bassins, welches dem Koeffizienten $r_{n,i}$ negativ, der den größten Absolutwert hat ($r_{n,i\,mini}$), geschlossen, und das mit einem Wert $\Delta''\alpha = r_{n,i}$

$_{mini} \cdot \alpha''o$ worin $\alpha''o$ die anfängliche Position dieses Ventils ist, wenn das Ventil, das dem Wert $r_{n,i}$ entspricht, schon im Großen geöffnet ist,

c) Elimination der extremen Werte der Koeffizienten $r_{n,i}$ und $r_{n,i\ mini}$, wenn das Ventil, das dem Wert $r_{n,i}$ entspricht, bis zu dem minimal zulässigen Wert schon geschlossen ist, und Befehl von irgendeiner der Operationen 1) und 2), je nachdem die verbleibenden Koeffizienten $r_{n,i}$ Werte haben, deren Vorzeichen alle negativ oder positiv sind, sowie von irgendeiner der Operationen 3a) bis 3c), wenn die verbleibenden Koeffizienten $r_{n,i}$ Werte mit unterschiedlichen Vorzeichen haben, bis zum Beteiligen von allen Bassins,

und daß der programmierbare Automat das Aussenden eines Alarms auslöst, wenn, sofern er zum letzten Mal die Ausführung der unter 3c) erschienen Operationen befiehlt, dieser Befehl zu keiner positiven Operation führt.

FIG.1

# FIG. 2